# EUROPÄISCHE PATENTSCHRIFT

(11) **EP 1 212 208 B1**
(45) Veröffentlichungstag und Bekanntmachung des Hinweises auf die Patenterteilung: **28.12.2005**
(21) Anmeldenummer: 00956432.9
(22) Anmeldetag: 11.08.2000
(51) Int. Cl.: B60K 37/06, B60K 35/00

(54) **MULTIFUNKTIONSBEDIENVORRICHTUNG**
MULTIFUNCTIONAL OPERATING DEVICE
DISPOSITIF DE COMMANDE MULTIFONCTIONNEL

(30) Priorität: 15.09.1999 DE 19944324
(43) Veröffentlichungstag der Anmeldung: 12.06.2002
(73) Patentinhaber: AUDI AG, 85045 Ingolstadt (DE)
(72) Erfinder: BOLLGÖHN, Andreas, D-85049 Ingolstadt (DE); HUDI, Ricky, D-85092 Kasing (DE); REMLINGER, Wolfram, D-85049 Ingolstadt (DE); SCHRÖDER, Jürgen, D-85139 Wettstetten (DE); HAMBERGER, Werner, D-85101 Lenting (DE)
(74) Vertreter: Thielmann, Frank
(86) Internationale Anmeldenummer: PCT/EP2000/007829
(87) Internationale Veröffentlichungsnummer: WO 2001/019639

(56) Entgegenhaltungen:
- EP-A- 0 701 926
- WO-A-97/31803

## Beschreibung

Die Erfindung betrifft eine Multifunktionsbedienvorrichtung, gemäß dem Oberbegriff des Patentanspruchs 1.

Multifunktionsbedienvorrichtungen für Kraftfahrzeuge sind allgemein bekannt. Als ein Beispiel aus dem Stand der Technik wird diesbezüglich auf die DE 38 36 555 A1 hingewiesen. Dort wird eine Multifunktionsbedieneinrichtung beschrieben, die als zentrales Element einen Drehschalter aufweist, dessen Betätigung blind erfolgen kann. Dieser Drehschalter ist um eine Drehachse drehbar und ferner in axialer Richtung gegen eine Feder beweglich. Der Drehschalter besitzt ferner für definierte Drehwinkel Raststellungen, in denen er gehalten wird. Um den Drehschalter von einer Raststellung in eine andere zu drehen, ist ein Rastwiderstand zu überwinden. Die Multifunktionsbedieneinrichtung weist außerdem einen Bildschirm auf, auf dem einzelne bedienbare Einrichtungen des Kraftfahrzeugs als Anzeigezeichen dargestellt werden können. Bei den Einrichtungen kann es sich zum Beispiel um ein Navigationssystem, ein Autotelefon, ein Autoradio oder eine sonstige Einrichtung handeln. Mit Hilfe des Drehschalters ist es möglich, eine der dargestellten Einrichtungen auszuwählen, da das aktuell durch den Drehschalter ausgewählte Anzeigezeichen auf dem Bildschirm optisch hervorgehoben wird. Durch kurzes Drücken des Drehschalters wird die optisch hervorgehobene Einrichtung aufgerufen und auf dem Bildschirm erscheint eine Liste von verschiedenen wählbaren Funktionen als Menüleiste. Die einzelnen Funktionen können nun ebenfalls durch Drehung des Drehschalters ausgewählt und durch kurzes Drücken aufgerufen werden. Als Folge kann auf dem Bildschirm eine Liste mit wählbaren Unterfunktionen angezeigt werden. Um von einer solchen Liste wieder in die Liste von Funktionen zurückzukommen, muß der Drehknopf für eine längere Zeit gedrückt werden.

Die beschriebene Multifunktionsbedieneinrichtung bietet zwar die Möglichkeit eine Funktion aus einer großen Anzahl von möglichen Funktionen auszuwählen, es ist jedoch zeitaufwendig und umständlich, ausgehend von einer dargestellten Liste von Unterfunktionen zu einer bestimmten Einrichtung eine Funktion einer anderen Einrichtung aufzurufen. Außerdem muß der Benutzer bei der Wahl einer Funktion aus der auf dem Bildschirm abgebildeten Liste stets den Bildschirm beobachten, was besonders den Fahrer von seiner eigentlichen Fahraufgabe ablenkt.

In der gattungsgemäßen EP 0 701 926 A wird eine Multifunktionsbedieneinrichtung beschrieben, die einen Bildschirm aufweist und bei der eine Anwahl individueller Funktionen innerhalb einer Funktionsgruppe mittels eines Drehschalters erfolgt, der eine Enter-Funktion zur Auswahl der Funktion aufweist. Für die Auswahl der den Funktionen übergeordneten Funktionsgruppen sind Druckschalter vorgesehen, die nebeneinander, unterhalb des Bildschirms angeordnet sind. Für häufig anzuwählende Funktionen sind zusätzliche Bedienelemente vorgesehen, die seitlich des Bildschirms angeordnet sind. Nach Auswahl einer Funktionsgruppe durch einen der Druckschalter werden die einer Funktionsgruppe zugeordneten Funktionen auf einer oder mehreren Bedienoberflächen des Bildschirms dargestellt, wobei die durch den Drehschalter angewählte Funktion graphisch hervorgehoben ist. Nach Auslösen der Enter-Funktion des Drehschalters wird die Funktion entweder durchgeführt, oder der Funktion zugeordnete Unterfunktionen werden auf dem Bildschirm dargestellt, die in Analogie zu den Funktionen ausgewählt werden können.

Aus der DE 298 06 461 U1 ist ein Multifunktions-Bedienerfeld bekannt, das im Bereich eines Prallkopfes eines Lenkrades angeordnet ist. Dieses Mulifunktions-Bedienerfeld weist Bedienelemente mit fester und Bedienelemente mit mehrfacher Funktionszuordnung auf. Als Bedienelemente mit fester Funktionszuordnung sind Schaltelemente und eine erste Gruppe von als kapazitive Bedienerfolien ausgebildeten Bedienelementen vorgesehen, während die mehrfache Funktionszuordnung durch Scroll-Schaltelemente erfolgt. Mit der Anwahl eines bestimmten Ausrüstungsteils eines Fahrzeugs durch ein solches Scroll-Schaltelement werden einer zweiten Gruppe von als kapazitive Bedienerfolien ausgebildeten Bedienelementen die für die Bedienung und Abstimmung von Parametern des jeweiligen Ausrüstungsteils notwendigen Funktionen zugeordnet. Zur optischen Darstellung der Betriebsdaten oder des Betriebszustandes des gewählten Ausrüstungsteils ist ein Display vorgesehen. Während die Schaltelemente, die Scroll-Schaltelemente und die erste Gruppe von als kapazitive Bedienerfolien ausgebildeten Bedienelementen in Form eines Kreises angeordnet sind, befindet sich die zweite Gruppe von als kapazitive Bedienerfolien ausgebildeten Bedienelementen innerhalb der durch den Kreis begrenzten Fläche des Lenkrades. In diesem Bereich kann auch eine Tastatur als Eingabeelement und ein Mikrophon für die Benutzung einer Telefonanlage angeordnet sein.

Ein weiteres Beispiel aus dem Stand der Technik stellt die DE 44 43 912 A1 dar. Die Bedienvorrichtung weist einen Bildschirm und eine dem Bildschirm zugeordnete Bedienfläche auf. Der Bildschirm und die Bedienfläche sind räumlich getrennt voneinander angeordnet. Der Bildschirm ist in eine Anzahl von Feldern unterteilt, die einzelnen Funktionen oder Funktionsgruppen zugeordnet sind. Die gleiche Einteilung ist auf der Bedienfläche wiederzufinden. Die einzelnen Felder auf der Bedienfläche sind durch hervortretende Begrenzungen voneinander getrennt, um eine blinde Bedienbarkeit zu erreichen. Für die Auswahl einer Funktion oder einer Funktionsgruppe führt ein Benutzer einen Finger über die Felder der Bedienfläche. Auf dem Bildschirm wird dabei jeweils das Feld optisch hervorgehoben, das dem Feld auf der Bedienfläche zugeordnet ist, auf dem sich gerade der Finger befindet. Um eine Funktion aufzurufen, wird auf ein ausgewähltes Feld ein Druck ausgeübt. Nachteilig an der beschriebenen Bedienvorrichtung ist jedoch, daß die Anzahl der wählbaren Funktionen oder Funktionsgruppen zunächst durch die Anzahl der vorhandenen Felder limitiert ist. Für bestimmte Verwendungen der Bedienvorrichtung kann beispielsweise die Eingabe einer Schriftzeichenfolge notwendig sein. Werden in der Bedienvorrichtung jedoch die Felder jeweils mit einem Buchstaben, einer Zahl oder einem anderen Schriftzeichen belegt, ist eine sehr große Zahl von Feldern auf dem Bildschirm und folglich auch auf der Bedienfläche notwendig. Ist jedoch solch eine große Anzahl an Feldern für die Bedienvorrichtung vorgesehen, wird die Bedienfläche zunehmend unübersichtlich und es kann zu einer fehlerhaften Auswahl der Felder kommen. Eine Mehrfachbelegung der einzelnen Felder würde sich hingegen nachteilig auf den Bedienkomfort auswirken. Außerdem ist im Fahrbetrieb nachteilig, daß der Bildschirm für die Wahl einer gewünschten Funktion ständig beobachtet werden muß.

Es ist daher Aufgabe der vorliegenden Erfindung eine Multifunktionsbedieneinrichtung mit verbessertem Bedienkomfort bereitzustellen.

Diese Aufgabe wird gelöst durch eine Multifunktionsbedienvorrichtung mit den Merkmalen des Patentanspruchs 1. Die Unteransprüche betreffen besonders zweckmäßige Weiterbildungen der Erfindung.

Erfindungsgemäß ist also eine Multifunktionsbedienvorrichtung vorgesehen, deren Bedienelemente blind bedient werden können. Die erfindungsgemäße Multifunktionsbedienvorrichtung weist einen Drehschalter zur Auswahl von Funktionen auf, die innerhalb eines Anzeigefeldes auf einer Monitoreinheit darstellbar sind. Der Drehschalter ermöglicht so die Auswahl einer Funktion aus einer nahezu beliebig großen Anzahl von Funktionen. Um den Drehschalter sind haptisch unterscheidbare Druckschalter angeordnet, denen ebenfalls Anzeigefelder auf der Monitoreinheit zugeordnet sind. Diese Zuordnung ist für den Benutzer leicht erfaßbar, da die Anordnung der den Druckschaltern zugeordneten Anzeigefelder auf der Monitoreinheit zumindest schematisch der Anordnung der Druckschalter entspricht. Gleichzeitig werden die oben beschriebenen Nachteile eines Drehschalters durch die Kombination mit den Druckschaltern aufgehoben. Mit Hilfe der den Druckschaltern zugeordneten Anzeigefeldern auf dem Monitor ist es dem Benutzer möglich, unabhängig von den dargestellten Funktionen, die mit dem Drehschalter anwählbar sind, Funktionen anzuwählen, die in den den Druckschaltern zugeordneten Anzeigefeldern angezeigt werden. Dies können vor allem Funktionen sein, die sehr häufig gewählt werden oder die den auf dem dem Drehschalter zugeordneten Anzeigefeld dargestellten Funktionen übergeordnet sind. Die Anordnung von Druckschaltern um einen Drehschalter herum ist außerdem ergonomisch besonders günstig, da der Benutzer den gewünschten Druckschalter ausgehend von dem Drehschalter treffsicher ohne Kontrollblick auf die Monitoreinheit ertasten und betätigen kann und ohne daß andere Druckschalter mit dem Finger überfahren werden müssen, wodurch ein fehlerhaftes Drücken eines anderen Druckschalters verhindert wird. Ein Blick auf die Monitoreinheit ist lediglich dafür notwendig, eine Information darüber zu erhalten, welcher Druckschalter mit der gewünschten Funktion belegt ist. Die Zeit, die der Benutzer durch die Beobachtung des Bildschirms abgelenkt wird, wird daher erheblich verkürzt. Eine solche Vorrichtung bietet einen hohen Bedienkomfort und gleichzeitig eine große Flexibilität bezüglich der möglichen Anwendungen. Für bestimmte Funktionen kann es beispielsweise sinnvoll sein, dem Benutzer eine äußerst schnelle Anwahl zu ermöglichen, die nur durch die Betätigung von Druckschaltern gewährleistet wird. Durch die besonders günstige Anordnung der Druckschalter bezüglich des Drehschalters und die haptische Unterscheidbarkeit der Druckschalter werden außerdem fehlerhafte Betätigungen weitgehend ausgeschlossen.

Besonders vorteilhafter Weiterbildungen der Erfindung werden im folgenden aufgeführt. Die Bedeutungen einzelner hierbei verwendeter Begriffe sollen jedoch zunächst kurz erläutert werden. Eine Funktionssteuervorrichtung ist eine Vorrichtung, die durch die Multifunktionsbedienvorrichtung bedient werden kann, wie beispielsweise ein Radiogerät, ein Kompaktkassettengerät, ein TV-Gerät, ein Bordrechner, ein Kompakt-Disk-Spieler, ein Telefon, eine Diebstahlsicherungsanlage, ein Klimasteuergerät, ein Zeitsteuer- und Zeitanzeigegerät, ein Navigationssystem, ein Verkehrsinformationssystem, ein Mailsystem, eine Geschwindigkeitskontrollanlage oder dergleichen. Ein Funktionssteuerelement ist der Funktionssteuervorrichtung untergeordnet, wie einer Klimaanlage Funktionssteuerelemente untergeordnet sind, die die Luftverteilung oder die zuzuführende Luftmenge steuern. Ein Funktionswert ist ein Wert, der einer Funktion oder einem Funktionssteuerelement untergeordnet ist. Er kann daher beipielsweise ein Maß für die zuzuführende Luftmenge angeben. Eine Funktion ist hingegen einer Funktionssteuervorrichtung oder einem Funktionssteuerelement untergeordnet und kann daher beispielsweise bei der Bedienung einer Klimaanlage das Umschalten von manuellem Betrieb auf Automatikbetrieb betreffen.

Eine erste vorteilhafte Weiterbildung der Erfindung sieht vor, daß die Lage des dem Drehschalter zugeordneten Anzeigefeldes bezüglich der den Druckschaltern zugeordneten Anzeigefelder zumindest schematisch der Lage des Drehschalters bezüglich der Druckschalter entspricht. Die Bedienbarkeit der Multifunktionsbedienvorrichtung wird auf diese Weise dahingehend vereinfacht, daß der Benutzer alleine durch die Betrachtung der Monitoreinheit, über die Anordnung des Drehschalters zu den Druckschaltern auf der Bedienfläche informiert wird.

Innerhalb eines Anzeigefeldes kann in vorteilhafter Weise mindestens ein Anzeigezeichen darstellbar sein, wobei durch ein Anzeigezeichen eine Funktionssteuervorrichtung, ein Funktionssteuerelement, eine Funktion oder ein Funktionswert symbolisierbar ist oder das Anzeigezeichen ein Schriftzeichen ist.

Durch die Betätigung einer der Druckschalter kann ein Menü mit dem mindestens einen Anzeigezeichen aufrufbar sein, wobei das Menü in dem dem Drehschalter zugeordneten Anzeigefeld darstellbar ist. Die durch den Drehschalter anwählbaren Anzeigezeichen sind folglich den mit den Druckschaltern auswählbaren Anzeigezeichen untergeordnet, wodurch eine Übersichtlichkeit geschaffen wird, die den Bedienungskomfort weiter steigert.

In einer weiteren besonders vorteilhaften Weiterbildung der Erfindung ist vorgesehen, daß durch die Betätigung eines Bestätigungsschalters nach der Wahl des Anzeigezeichens durch den Drehschalter die Funktionssteuervorrichtung oder das Funktionssteuerelement aktivierbar, die Funktion ausführbar ist oder der Funktionswert umsetzbar oder das Schriftzeichen setzbar ist.

Außerdem kann durch Betätigung eines oder des Bestätigungsschalters ein Untermenü, das dem durch den Drehschalter ausgewählten Anzeigezeichen zugeordnet ist und das mindestens ein Anzeigezeichen umfaßt, innerhalb des dem Drehschalter zugeordneten Anzeigefeldes darstellbar sein. Auf diese Weise können beliebig viele Untermenüs mit beliebig vielen Anzeigezeichen nacheinander aufgerufen werden. Die Anzahl der wählbaren Funktionen und/oder Funktionswerte ist dadurch nahezu unbegrenzt.

Gemäß einer weiteren Ausführungsform kann vorgesehen werden, daß durch Betätigung einer der Druckschalter eine Funktionssteuervorrichtung oder ein Funktionssteuerelement aktivierbar oder eine Funktion ausführbar oder ein Funktionswert umsetzbar ist, so daß Bedienschritte, die häufig erfolgen, schnell und zielsicher getätigt werden können.

Die Multifunktionsbedienvorrichtung kann weiterhin mindestens einen Wahlschalter aufweisen, durch den mindestens eine oder eine weitere zu bedienende Funktionssteuervorrichtung wählbar ist, wobei der Wahlschalter als Dreh-, Druck- oder Schiebeschalter ausgebildet ist. Durch diesen mindestens einen Wahlschalter wird eine besonders schnelle Auswahl der zu bedienenden Funktionssteuervorrichtung gewährleistet. Der Benutzer kann auf diese Art und Weise sehr kurz hintereinander verschiedene Funktionssteuervorrichtungen bedienen.

Nach Betätigung des Wahlschalters kann die gewählte Funktionssteuervorrichtung als Anzeigezeichen innerhalb eines dafür vorgesehenen Anzeigefeldes auf der Monitoreinheit darstellbar sein, wodurch der Benutzer darüber informiert wird, welche Funktionssteuervorrichtung er augenblicklich aktiviert hat und folglich bedienen kann.

Nach Betätigung des Wahlschalters ksnnen die der gewählten Funktionssteuervorrichtung zugeordneten Funktionssteuerelemente und/oder Funktionen und/oder Funktionswerte als Anzeigezeichen innerhalb der Anzeigefelder, die den Druckschaltern zugeordnet sind, darstellbar sein. Der Benutzer wird folglich in einer sehr übersichtlichen Form darüber informiert, welche Funktionssteuerelemente und/oder Funktionen und/oder Funktionswerte er bei einer bestimmten Funktionssteuervorrichtung wählen kann.

Eine weitere besonders vorteilhafte Weiterbildung der Erfindung sieht vor, daß der Drehschalter auch ein Druckschalter ist, der axial beweglich ist, und dadurch noch weitere funktionelle Aufgaben erfüllen kann.

Eine weitere vorteilhafte Weiterbildung der Erfindung sieht vor, daß der Drehschalter der Bestätigungsschalter ist. Nach einer Wahl eines Anzeigezeichens kann dadurch ohne zeitliche Verzögerung, die durch das Ertasten eines separaten Bestätigungsschalters auftreten würde, eine Bestätigung erfolgen.

Besonders vorteilhafte Ausführungsbeispiele sind schematisch in den folgenden Zeichnungen dargestellt. Es zeigen
- Figur 1:: eine in einem Kraftfahrzeug angebrachte erfindungsgemäße Multifunktionsbedienvorrichtung;
- Figur 2:: ein erstes konkretes Anwendungsbeispiel für eine weitere Ausführungsform einer erfindungsgemäßen Multifunktionsbedienvorrichtung; und
- Figur 3:: ein zweites konkretes Anwendungsbeispiel für eine weitere Ausführungsform einer erfindungsgemäßen Multifunktionsbedienvorrichtung.

Gleiche Bauteile bzw. Bauteilabschnitte weisen in den drei Figuren die gleiche Bezifferung auf.

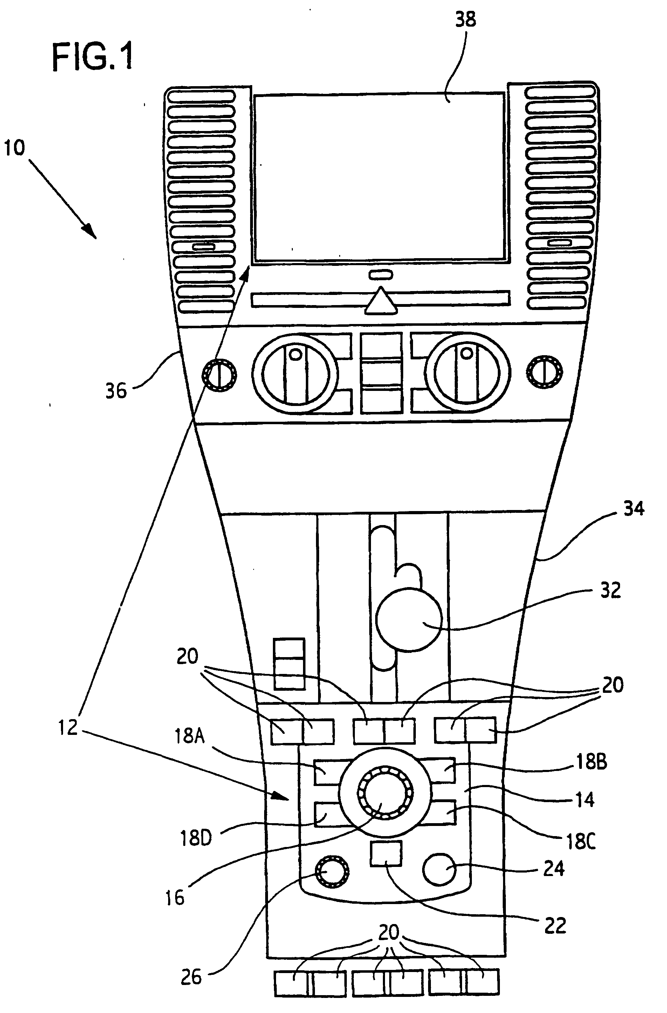

Figur 1 zeigt die Mittelkonsole 10 eines Kraftfahrzeuges, in die die schematisch dargestellte erfindungsgemäße Multifunktionsbedienvorrichtung 12 eingebaut ist. Die Hauptbestandteile der dargestellten Multifunktionsbedienvorrichtung 12 sind eine Monitoreinheit 38 und ein Drehschalter 16, der von vier Druckschaltern 18A, 18B, 18C und 18D umgeben ist. Außerdem weist die Multifunktionsbedienvorrichtung 12 sechs Wahlschalter 20 oberhalb des Drehschalters 16 auf und weitere sechs Wahlschalter 20, die unterhalb des Drehschalters 16 angeordnet sind. Die einzelnen Wahlschalter 20 sind bestimmten Funktionssteuervorrichtungen zugeordnet, die nach Drücken des entsprechenden Wahlschalters 20 durch den Drehschalter 16 und die vier Druckschalter 18A, 18B, 18C und 18D bedient werden können. Unterhalb des Drehschalters 16 sind weiterhin eine sogenannte "TALK"-Taste 24, eine sogenannte "BACK"-Taste 22 und ein Drehknopf 26 angebracht, mit dem die Lautstärke einer Einrichtung des Kraftfahrzeuges regelbar ist und der gleichzeitig als Ein/Aus-Schalter verwendbar ist. Der Bereich der Mittelkonsole 10 des Kraftfahrzeugs, in dem sich der Drehschalter 16, die Druckschalter 18A, 18B, 18C und 18D, die Wahlschalter 20, die "TALK"-Taste 24, die "BACK"-Taste 22 und der Drehknopf 26 befinden, bildet die Bedienfläche 14 der Multifunktionsbedienvorrichtung 12. Diese Bedienfläche 14 ist von dem Benutzer der Multifunktionsbedienvorrichtung 12 bequem mit der Hand zu erreichen und außerdem auch blind ertastbar, da die Bedienfläche durch seitlich Erhebungen gekennzeichnet ist. Die einzelnen Schalter und Tasten sind ebenfalls durch Erhebungen oder Vertiefungen voneinander getrennt. Oberhalb der genannten Bedienfläche 14 schließt sich eine Fläche 34 an, auf der zum Beispiel ein Gangwahlhebel 32 bewegbar ist. Unterhalb der Monitoreinheit 38 ist eine Bedienfläche 36 zur Bedienung einer Klimaanlage zu erkennen, wobei die Bedienfläche 36 die herkömmlichen Bedienelemente aufweist. Die Monitoreinheit 38 ist so hoch positioniert, daß der Benutzer bei kurzer Betrachtung der Monitoreinheit 38 nicht von dem Verkehrsgeschehen abgelenkt wird.

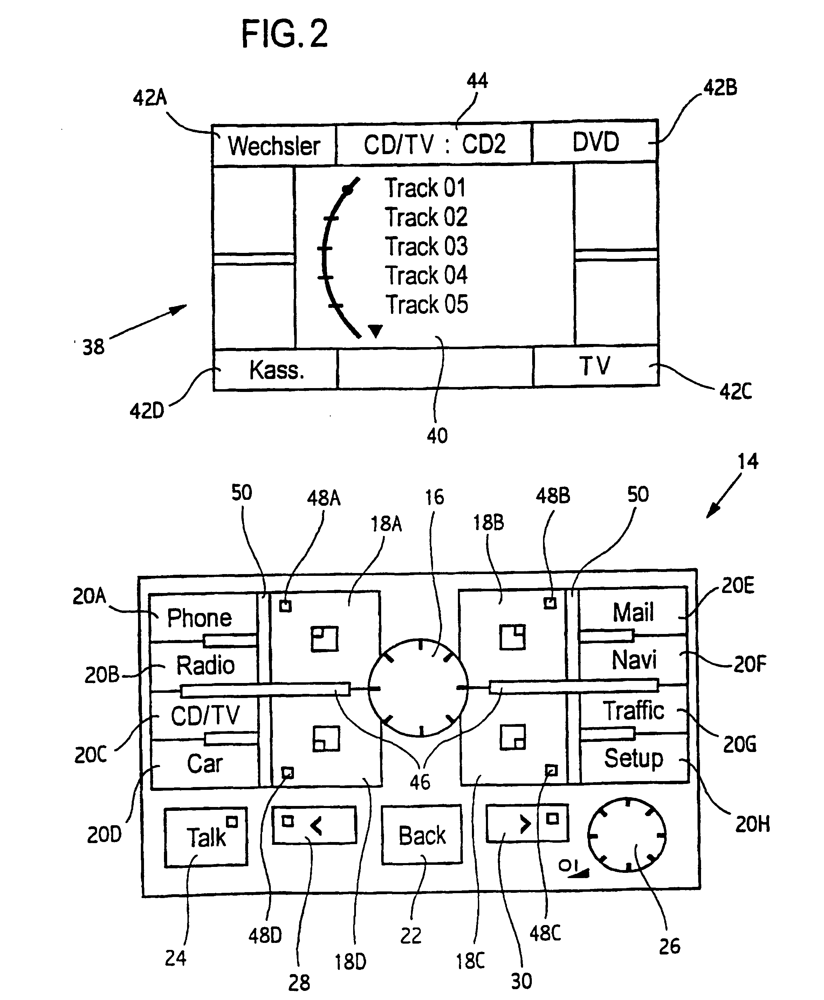

Die Anwendung der Multifunktionsbedienvorrichtung 14, 38 soll an einem ersten in Figur 2 dargestellten Ausführungsbeispiel beschrieben werden, wobei die Monitoreinheit 38 und die Bedienfläche 14 bei einem der Bedienschritte dargestellt sind. Die Druckschalter 18A, 18B, 18C, und 18D und der Drehschalter 16 sind durch Erhebungen 46 und Vertiefungen 50 voneinander getrennt. Die vier Druckschalter 18A, 18B, 18C und 18D weisen Lämpchen 48A, 48B, 48C und 48D auf, die jeweils nach dem Drüken des entsprechenden Druckschalters 18A, 18B, 18C und 18D leuchten. Die acht ebenfalls haptisch unterscheidbaren aufgeführten Wahlschalter 20 sind mit den folgenden Funktionssteuervorrichtungen belegt: 20A Telefon, 20B Radiogerät, 20C Medien, 20D Bordcomputer, 20E Mailsystem, 20F Navigationssystem, 20G Verkehrsinformationssystem, 20H Set-up. Die Wahlschalter 20 sind entsprechend der zugeordneten Funktionssteuervorrichtungen zumindest mit einem Kürzel bezeichnet, so daß die einzelnen Funktionen der Wahlschalter 20 für den Benutzer sofort ersichtlich sind. In dem hier beschriebenen Ausführungsbeispiel wurde der Wahlschalter Medien "CD/TV" gedrückt, woraufhin in dem Anzeigefeld 44 "CD/TV" als Anzeigezeichen für die gewählte Funktionssteuervorrichtung erscheint. Dieses in dem Anzeigefeld 44 dargestellte Anzeigezeichen ist optisch hervorgehoben. Gleichzeitig erscheinen in den den Druckschaltern 18A, 18B, 18C und 18D zugeordneten Anzeigefeldern 42A, 42B, 42C und 42D Anzeigezeichen, die Funktionssteuerelemente symbolisieren, die der gewählten Funktionssteuervorrichtung untergeordnet sind. Als Funktionssteuerelemente sind ein CD-Wechsler (Wechsler), ein Digital-Video-Disc-Gerät (DVD), ein TV-Gerät (TV) und ein Kompaktkassettengerät (Kass.), aufgeführt. Dem Zustand der Monitoreinheit in Figur 2 sind folgende Schritte vorangegangen: Zur Auswahl des CD-Wechslers wurde der Druckschalter 18A gedrückt, wodurch das Anzeigezeichen in dem zugehörigen Anzeigefeld 42A optisch hervorgehoben und zusätzlich rechts von der Funktionssteuervorrichtungsbezeichnung in dem Anzeigefeld 44 dargestellt wurde. Gleichzeitig erschien ein Menü innerhalb des Anzeigefeldes 40, das Anzeigezeichen umfaßte, durch die der Benutzer über die geladenen CDs informiert wurde. Durch Drehen des Drehschalters 16 konnte eines der Anzeigezeichen ausgewählt werden, das dadurch gleichzeitig optisch hervorgehoben wurde. Beim Drehen des Drehschalters 16 sind Raststellungen zu überwinden, die den einzelnen Anzeigezeichen in dem Anzeigefeld 40 zugeordnet sind. Durch Drücken des auch als Druckschalter ausgebildeten Drehschalters 16 wurde die ausgewählte CD "CD2" in eine Stellung überführt, die das Abspielen der CD erlaubt. Das Anzeigezeichen "CD2" ist daher nun in dem Anzeigefeld 44 rechts von der gewählten Funktionssteuervorrichtung aufgeführt. Gleichzeitig wird im Anzeigefeld 40 ein Menü dargestellt, das in Figur 2 zu erkennen ist. Durch Drehen des Drehschalters 16 kann nun der gewünschte Abschnitt (Track) auf der CD ausgewählt werden. Nicht alle Anzeigezeichen eines Menüs müssen gleichzeitig auf der Monitoreinheit 38 darstellbar sein. In dem aufgeführten Beispiel bewirkt das Drehen des Drehschalters 16, daß weitere Bereiche des Menüs, das heißt beispielsweise die Tracks 6-10, auf der Monitoreinheit 38 angezeigt werden. Erneut kann ein Anzeigezeichen durch den Drehschalter 16 ausgewählt, optisch hervorgehoben und durch Drücken des Drehschalters 16 aktiviert werden. In dem vorliegenden Beispiel wird dadurch ein bestimmter Abschnitt auf der CD abgespielt.

Durch Drücken der "BACK"-Taste 22 würde im dargestellten Fall wiederum das Menü mit der Angabe der geladenen CDs in dem Anzeigefeld 40 erscheinen, und es könnte auf die eben beschriebene Art und Weise eine andere CD und ein anderer Abschnitt der anderen CD ausgewählt werden.

Mit dem ebenfalls auf dem Bedienfeld befindlichen Drehknopf 26 kann die Lautstärke reguliert werden und die Multifunktionsbedienvorrichtung 14, 38 ein- und ausgeschaltet werden. Soll ein anderes Funktionssteuerelement ausgewählt werden, ist unabhängig von dem zuletzt getätigten Bedienschritt lediglich der entsprechende Druckschalter 18B, 18C oder 18D zu betätigen. Möchte der Benutzer eine andere Funktionssteuervorrichtung bedienen, drückt er ebenfalls unabhängig von den vorher getätigten Bedienschritten den entsprechend bezeichneten Wahlschalter 20.

Die "TALK"-Taste 24 und die rechts und links nebem der "BACK"-Taste 22 dargestellten Pfeil-Tasten 28 und 30 dienen anderen, hier nicht weiter beschriebenen Funktionen.

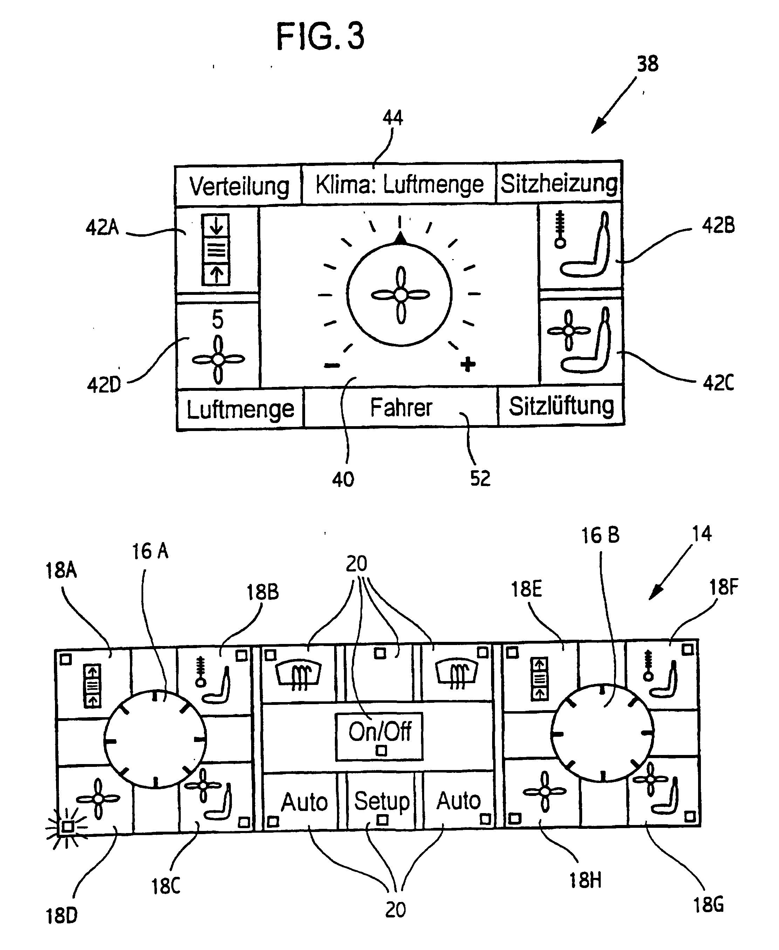

In Figur 3 ist ein Bedienschritt in einem zweiten Ausführungsbeispiel der erfindungsgemäßen Multifunktionsbedienvorrichtung 14, 38 dargestellt. Wiederum sind die Bedienfläche 14 und die Monitoreinheit 38 abgebildet. Die gezeigte Bedienfläche 14 kann die herkömmliche Bedienfläche für die Bedienung einer Klimaanlage ersetzen. Sie wird zweckmäßigerweise auf der Mittelkonsole 10 (hier nicht gezeigt) eines Fahrzeugs angebracht und ist so gestaltet, daß sowohl Fahrer als auch Beifahrer die Klimaanlage ihren jeweiligen Bedürfnissen entsprechend einstellen können. Dies wird dadurch gewährleistet, daß rechts und links auf der Bedienfläche 14 zwei zentrale Drehschalter 16A und 16B positioniert sind, die jeweils von vier Druckschaltern 18A, 18B, 18C und 18D beziehungsweise 18E, 18F, 18G und 18H umgeben sind, die jeweils durch Erhebungen getrennt und dadurch haptisch unterscheidbar sind. Den Druckschaltern 18A-18H sind konkrete Funktionssteuerelemente zugeordnet, die durch Symbole auf den Druckschaltern 18A-18H gekennzeichnet sind. Haptisch getrennt von den beschriebenen beiden Druckschalter- und Drehschalteranordnungen sind Wahlschalter 20 angeordnet, mit denen Funktionen gewählt werden können, die nicht spezifisch für den Fahrer oder den Beifahrer sind. Dazu zählen beispielsweise die Frontscheibenheizung, die Umluft, die Heckscheibenheizung, die Ein-/Aus-Funktion und die Set-up-Funktion.

In dem vorliegenden Anwendungsbeispiel zeigt das Anzeigezeichen 52 an, daß der Modus für die Änderung der Einstellungen der Klimaanlage betreffend die Fahrerseite gewählt wurde. Die den Druckschaltern 18A, 18B, 18C und 18D zugeordneten Funktionssteuerelemente sind in den Anzeigefeldern 42A, 42B, 42C und 42D auf der Monitoreinheit 38 als Symbole zusammen mit den entsprechenden Begriffen dargestellt. In dem vorliegenden Beispiel kann durch Drücken der Druckschalter 18A, 18B, 18C oder 18D die Luftverteilung, die zuzuführende Luftmenge, die Sitzheizung und die Sitzlüftung beeinflußt werden. Wird der Druckschalter 18D gedrückt, wird das entsprechende Symbol mit dem Begriff "Luftmenge" auf der Monitoreinheit 38 optisch hervorgehoben. Gleichzeitig wird in dem Anzeigefeld 44 das ausgewählte Funktionssteuerelement "Luftmenge" rechts von dem Anzeigezeichen "Klima" abgebildet, wobei die Anzeige "Klima" verdeutlicht, daß die Klimaanlage die Funktionssteuervorrichtung ist, die gerade von dem Benutzer bedient werden kann. Auf dem Anzeigefeld 40 erscheint eine kreisförmige Skala, auf der das Maß der zugeführten Luftmenge ausgewählt werden kann. Dies geschieht durch das Drehen des Drehschalters 16A. Der durch den Drehschalter 16A auf der Skala ausgewählte Wert wird durch einen Pfeil gekennzeichnet und außerdem in dem Anzeigefeld 42D angegeben. Durch Drücken des Drehschalters 16A wird der gewünschte Funktionswert von der Klimaanlage umgesetzt. Die beschriebene Einstellung kann durch den Fahrer oder den Beifahrer vorgenommen werden, so daß jeder die von ihm für seine Seite gewünschten Einstellungen vornehmen kann.

Zweckmäßigerweise kann die Multifunktionsbedienvorrichtung auch zwei verschiedene Monitoreinheiten 38 aufweisen, die jeweils für den Fahrer oder den Beifahrer optimal sichtbar angeordnet sind. Die Monitoreinheit 38 des Fahrers kann beispielsweise in das Cockpit integriert sein.

Die in Figur 2 und 3 angegebenen Ausführungsformen der Multifunktionsbedienvorrichtung können auch kombiniert werden.

Eine weitere nicht in den Figuren dargestellte Ausführungsform der erfindungsgemäßen Multifunktionsbedienvorrichtung weist sechs Druckschalter auf, die um den Drehschalter angeordnet sind und ebenfalls haptisch unterscheidbar sind. Mit den sechs Druckschaltern können sechs verschiedene Funktionssteuervorrichtungen Medien, Kommunikation, Klimaanlage, Navigationssystem, Geschwindigkeitskontrollsystem und Verkehrsinformationssystem gewählt werden, die auf der Monitoreinheit innerhalb der zugeordneten Anzeigefeldern als Anzeigezeichen dargestellt werden. Wird einer der Druckschalter betätigt, erscheinen in den sechs den Druckschaltern zugeordneten Anzeigefeldern der ausgewählten Funktionssteuervorrichtung "Medien" untergeordnete Funktionssteuerelemente wie "TV-Gerät", "Radio", "Kompaktkassettengerät", "CD-Spieler", "DVD-Gerät" und "MD-Gerät". Nach Wahl des Funktionssteuerelementes "CD-Spieler" durch einen der Druckschalter erscheinen sechs verschiedene Funktionen in den sechs Anzeigefelder: "CD-Wahl", "Start", "Stop", "nächster Track", "vorheriger Track" und "Trackwahl". Eine dieser angezeigten Funktionen wird durch Drücken einer der Druckschalter ausgewählt und umgesetzt. Wird durch Drücken des entsprechenden Druckschalters "Start" gewählt, wird die in Ableseposition befindliche CD abgespielt. Bei der Funktion "Trackwahl" ist es jedoch notwendig, einen Funktionswert, hier einen bestimmten Track festzulegen, der mit Hilfe des Drehschalters ausgewählt werden kann. Diese Ausführungsform kann sinnvoll sein, um die Anbringung zusätzlicher Wahlschalter für die Auswahl von Funktionssteuervorrichtungen zu vermeiden und auf diese Weise Platz zu sparen. Außerdem können Funktionen sehr schnell ausgewählt werden, ohne längere Zeit auf den Bildschirm zu blicken. Dies ist besonders bei häufig gewählten Funktionen von Vorteil.

## Patentansprüche

1. Multifunktionsbedienvorrichtung (12), insbesondere zum Einbau in ein Fahrzeug, mit einem Drehschalter (16) zur Auswahl von Funktionen, die innerhalb eines Anzeigefeldes (40) auf einer Monitoreinheit (38) darstellbar sind, wobei die Mutifunktionsbedienvorrichtung (12) eine Kombination aus dem Drehschalter (16) und mehreren Druckschaltern (18) aufweist, und die Druckschalter (18) derart gestaltet und/oder angeordnet sind, daß sie haptisch unterscheidbar sind,
**dadurch gekennzeichnet,**
**daß** die Druckschalter (18) um den Drehschalter (16) angeordnet sind, daß die Anordnung von Anzeigefeldern (42) auf der Monitoreinheit (38), die den Druckschaltern (18) zugeordnet sind, zumindest schematisch der Anordnung der Druckschalter (18) entspricht.

2. Multifunktionsbedienvorrichtung (12) nach Anspruch 1,
**dadurch gekennzeichnet,**
**daß** die Lage des dem Drehschalter (16) zugeordneten Anzeigefeldes (40) bezüglich der den Druckschaltern (18) zugeordneten Anzeigefelder (42) zumindest schematisch der Lage des Drehschalters (16) bezüglich der Druckschalter (18) entspricht.

3. Multifunktionsbedienvorrichtung (12) nach einem der vorhergehenden Ansprüche,
**dadurch gekennzeichnet,**
**daß** innerhalb eines Anzeigefeldes (40, 42, 44, 52) mindestens ein Anzeigezeichen darstellbar ist, wobei durch ein Anzeigezeichen eine Funktionssteuervorrichtung, ein Funktionssteuerelement, eine Funktion oder ein Funktionswert symbolisierbar ist oder das Anzeigezeichen ein Schriftzeichen ist.

4. Multifunktionsbedienvorrichtung (12) nach Anspruch 3,
**dadurch gekennzeichnet,**
**daß** durch Betätigung einer der Druckschalter (18) das Anzeigezeichen in dem dem Druckschalter (18) zugeordneten Anzeigefeld (42) wählbar, insbesondere optisch hervorhebbar ist.

5. Multifunktionsbedienvorrichtung (12) nach einem der Ansprüche 3 oder 4,
**dadurch gekennzeichnet,**
**daß** durch Betätigung einer der Druckschalter (18) weitere Anzeigezeichen in den den Druckschaltern (18) zugeordneten Anzeigefeldern (42) aufrufbar sind.

6. Multifunktionsbedienvorrichtung (12) nach einem der Ansprüche 3 bis 5,
**dadurch gekennzeichnet,**
**daß** durch Betätigung einer der Druckschalter (18) ein Menü mit dem mindestens einem Anzeigezeichen aufrufbar ist, wobei das Menü in dem dem Drehschalter (16) zugeordneten Anzeigefeld (40) darstellbar ist.

7. Multifunktionsbedienvorrichtung (12) nach einem der Ansprüche 3 bis 6,
**dadurch gekennzeichnet,**
**daß** eines der oder das Anzeigezeichen in dem dem Drehschalter (16) zugeordneten Anzeigefeld (40) durch Drehung des Drehschalters (16) wählbar, insbesondere optisch hervorhebbar ist.

8. Multifunktionsbedienvorrichtung (12) nach Anspruch 7,
**dadurch gekennzeichnet,**
**daß** durch Betätigung eines Bestätigungsschalters (16) nach der Wahl des Anzeigezeichens durch den Drehschalter (16) die Funktionssteuervorrichtung oder das Funktionssteuerelement aktivierbar, die Funktion ausführbar, der Funktionswert umsetzbar oder das Schriftzeichen setzbar ist.

9. Multifunktionsbedienvorrichtung (12) nach einem der Ansprüche 7 oder 8,
**dadurch gekennzeichnet,**
**daß** durch Betätigung eines oder des Bestätigungsschalters (16) ein Untermenü, das dem durch den Drehschalter (16) ausgewählten Anzeigezeichen zugeordnet ist und das mindestens ein Anzeigezeichen umfaßt, innerhalb des dem Drehschalter (16) zugeordneten Anzeigefeldes (40) darstellbar ist.

10. Multifunktionsbedienvorrichtung (12) nach einem der vorhergehenden Ansprüche,
**dadurch gekennzeichnet,**
**daß** durch Betätigung einer der Druckschalter (18) eine oder die Funktionssteuervorrichtung oder ein oder das Funktionssteuerelement aktivierbar oder eine oder die Funktion ausführbar oder ein oder der Funktionswert umsetzbar ist.

11. Multifunktionsbedienvorrichtung (12) nach einem der vorhergehenden Ansprüche,
**dadurch gekennzeichnet,**
**daß** die Multifunktionsbedienvorrichtung (12) mindestens einen Wahlschalter (20) aufweist, durch den mindestens eine oder eine weitere zu bedienende Funktionssteuervorrichtung wählbar ist, wobei der Wahlschalter (20) als Dreh-, Druck-oder Schiebeschalter ausgebildet ist.

12. Multifunktionsbedienvorrichtung (12) nach Anspruch 11,
**dadurch gekennzeichnet,**
**daß** nach Betätigung des Wahlschalters (20) die gewählte Funktionssteuervorrichtung als Anzeigezeichen innerhalb eines dafür vorgesehenen Anzeigefeldes (44) auf der Monitoreinheit (38) darstellbar ist.

13. Multifunktionsbedienvorrichtung (12) nach einem der Ansprüche 11 oder 12,
**dadurch gekennzeichnet,**
**daß** nach Betätigung des Wahlschalters (20) die der gewählten Funktionssteuervorrichtung zugeordneten Funktionssteuerelemente und/oder Funktionen und/oder Funktionswerte als Anzeigezeichen innerhalb der Anzeigefelder (42), die den Druckschaltern (18) zugeordnet sind, darstellbar sind.

14. Multifunktionsbedienvorrichtung (12) nach einem der vorhergehenden Ansprüche,
**dadurch gekennzeichnet,**
**daß** der Drehschalter (16) auch ein Druckschalter ist.

15. Multifunktionsbedienvorrichtung (12) nach Anspruch 14,
**dadurch gekennzeichnet,**
**daß** der Drehschalter (16) ein oder der Bestätigungsschalter (16) ist.

16. Multifunktionsbedienvorrichtung (12) nach einem der vorhergehenden Ansprüche,
**dadurch gekennzeichnet,**
**daß** durch die Multifunktionsbedieneinrichtung mindestens eine oder mindestens die Funktionssteuervorrichtung bedienbar ist, die ein Radiogerät und/oder ein Kompaktkassettengerät und/oder ein TV-Gerät und/oder einen Kompakt-Disk-Spieler und/oder einen Bordrechner und/oder ein Telefon und/oder eine Diebstahlsicherungsanlage und/oder ein Klimasteuergerät und/oder ein Zeitsteuer-und Zeitanzeigegerät und/oder ein Navigationssystem und/oder ein Verkehrsinformationssystem und/oder ein Mailsystem und/oder eine Geschwindigkeitskontrollanlage ist.

## Claims

1. Multi-function operating device (12), in particular for installation in a vehicle, comprising a rotary switch (16) for selection of functions which are displayed within a display field (40) on a monitor unit (38), and the multi-function operating unit (12) comprises a combination of the rotary switch (16) and a plurality of pressure switches (18), and the pressure switches (18) are designed and/or arranged in such a manner that they can be haptically distinguishable, **characterised in that** the pressure switches (18) are arranged around the rotary switch (16), and the arrangement of display fields (42) on the monitor unit (38), which are associated with the pressure switches (18), correspond at least diagrammatically with the arrangement of the pressure switches (18).

2. Multi-function operating device (12) according to Claim 1, **characterised in that** the position of the display field (40) which is associated with the rotary switch (16) relative to the display fields (42) associated with the pressure switches (18) corresponds at least diagrammatically with the position of the rotary switch (16) relative to the pressure switches (18).

3. Multi-function operating devices (12) according to one of the above claims, **characterised in that** within a display field (40, 42, 44, 52) can be displayed at least one display symbol, and a display symbol symbolises a function control device, a function control element, a function or a function value, or the display symbol is a letter symbol.

4. Multi-function operating device (12) according to Claim 3, **characterised in that** the display symbol in the display field (42) which is associated with the pressure switch (18) is selected, in particular optically highlighted, by operation of one of the pressure switches (18).

5. Multi-function operating device (12) according to one of Claims 3 or 4, **characterised in that** additional display symbols in display fields (42) associated with the pressure switches (18) can be called up by operating one of the pressure switches (18).

6. Multi-function operating device (12) according to one of Claims 3 to 5, **characterised in that** a menu can be called up by means of the at least one display symbol by operating one of the pressure switches (18), and the menu is displayed in the display field (40) which is associated with the rotary switch (16).

7. Multi-function operating device (12) according to one of Claims 3 to 6, **characterised in that** one of the display symbols, or the display symbol in the display field (40) which is associated with the rotary switch (16) is selected, in particular optically highlighted, by turning the rotary switch (16).

8. Multi-function operating device (12) according to Claim 7, **characterised in that** by operating one of the operating switches (16) after selection of a display field by the rotary switch (16) the function control device or the function control element can be activated, the function can be carried out, the function value can be converted or the symbol can be set.

9. Multi-function operating device (12) according to one of Claims 7 or 8, **characterised in that** by operating a or the operating switch (16), a submenu which is associated with the display symbol selected via the rotary switch (16) and which includes at least one display symbol is illustrated within the display field (40) which is associated with the rotary switch (16).

10. Multi-function operating device (12) according to one of the above claims, **characterised in that** by operating one of the pressure switches (18) a or the function control device or a or the function control element are activated or a or the function is carried out or a or the function value can be converted.

11. Multi-function operating device (12) according to one of the above claims, **characterised in that** the multi-function operating device (12) includes at least one selective switch (20) by means of which can be selected at least one or an additional function control device which is to be operated, and the selection switch (20) is designed as a rotary, pressure or slide switch.

12. Multi-function operating device (12) according to Claim 11, **characterised in that** after operating the selective switch (20), the selected function control device is displayed on the monitor unit (38) as display symbol within a therefore provided display field (44).

13. Multi-function operating device (12) according to one of Claims 11 or 12, **characterised in that** after operation of the selection switch (20) the function control elements and/or functions and/or function values associated with the selected function control device and/or functions and/or function values as display symbols are displayed within the display fields (42) which are associated with the pressure switches (18).

14. Multi-function operating device (12) according to one of the above claims, **characterised in that** the rotary switch (16) is also a pressure switch.

15. Multi-function operating device (12) according to Claim 14, **characterised in that** the rotary switch (16) is a or the operating switch (16).

16. Multi-function operating device (12) according to one of the above claims, **characterised in that** by way of the multi-function operating device can be operated at least one or at least the function control device which is a radio and/or a compact cassette unit and/or a TV unit and/or a compact disc player and/or an onboard computer and/or a telephone and/or an intruder alarm unit and/or a climate control unit and/or a time control and time indicating unit and/or a navigation system and/or a traffic information system and/or a mail system and/or a speed control unit.

## Revendications

1. Dispositif de commande multifonctionnel (12), en particulier pour l'intégration dans un véhicule automobile, avec un commutateur rotatif (16) pour la sélection de fonctions qui peuvent être représentées à l'intérieur d'une zone d'affichage (40) sur une unité de moniteur (38), le dispositif de commande multifonctionnel (12) présentant une combinaison faite d'un commutateur rotatif (16) et de plusieurs commutateurs à pression (18) et les commutateurs à pression (18) étant conçus et/ou agencés de telle sorte qu'ils peuvent être différenciés de façon tactile, **caractérisé en ce que** les commutateurs à pression (18) sont agencés autour du commutateur rotatif (16) et **en ce que** l'agencement des zones d'affichage (42) de l'unité de moniteur (38) qui sont affectées aux commutateurs à pression (18), correspond au moins schématiquement à l'agencement des commutateurs à pression (18).

2. Dispositif de commande multifonctionnel (12) selon la revendication 1, **caractérisé en ce que** la position de la zone d'affichage (40) affectée au commutateur rotatif (16) par rapport aux zones d'affichage (42) affectées aux commutateurs à pression (18) correspond au moins schématiquement à la position du commutateur rotatif (16) par rapport aux commutateurs à pression (18).

3. Dispositif de commande multifonctionnel (12) selon l'une quelconque des revendications précédentes, **caractérisé en ce qu'**au moins un symbole d'affichage peut être représenté à l'intérieur d'une zone d'affichage (40, 42, 44, 52), un dispositif de commande de fonction, un élément de commande de fonction, une fonction ou une valeur de fonction pouvant être symbolisé par un symbole d'affichage ou le symbole d'affichage étant un caractère.

4. Dispositif de commande multifonctionnel (12) selon la revendication 3, **caractérisé en ce que**, par l'actionnement de l'un des commutateurs à pression (18), le symbole d'affichage peut être sélectionné, en particulier mis en évidence visuellement, dans la zone d'affichage (42) affectée au commutateur à pression (18).

5. Dispositif de commande multifonctionnel (12) selon l'une quelconque des revendications 3 ou 4, **caractérisé en ce que**, par l'actionnement de l'un des commutateurs à pression (18), d'autres symboles d'affichage peuvent être appelés dans les zones d'affichage (42) affectées aux commutateurs à pression (18).

6. Dispositif de commande multifonctionnel (12) selon l'une quelconque des revendications 3 à 5, **caractérisé en ce que**, par l'actionnement de l'un des commutateurs à pression (18), un menu peut être appelé avec le au moins un symbole d'affichage, le menu pouvant être représenté dans la zone d'affichage (40) affectée au commutateur rotatif (16).

7. Dispositif de commande multifonctionnel (12) selon l'une quelconque des revendications 3 à 6, **caractérisé en ce que** l'un des symboles d'affichage ou le symbole d'affichage peut être sélectionné, en particulier mis en évidence visuellement, dans la zone d'affichage (40) affectée au commutateur rotatif (16) par une rotation du commutateur rotatif (16).

8. Dispositif de commande multifonctionnel (12) selon la revendication 7, **caractérisé en ce que**, par l'actionnement d'un commutateur de confirmation (16) après la sélection du symbole d'affichage au moyen du commutateur rotatif (16), le dispositif de commande de fonction ou l'élément de commande de fonction peut être activé, la fonction peut être exécutée, la valeur de fonction peut être appliquée ou le caractère peut être introduit.

9. Dispositif de commande multifonctionnel (12) selon l'une quelconque des revendications 7 ou 8, **caractérisé en ce que**, par l'actionnement d'un ou du commutateur de confirmation (16), un menu secondaire qui est affecté au symbole d'affichage sélectionné au moyen du commutateur rotatif (16) et qui comprend au moins un symbole d'affichage peut être représenté à l'intérieur de la zone d'affichage (40) affectée au commutateur rotatif (16).

10. Dispositif de commande multifonctionnel (12) selon l'une quelconque des revendications précédentes, **caractérisé en ce que**, par l'actionnement de l'un des commutateurs à pression (18), un ou le dispositif de commande de fonction ou un ou l'élément de commande de fonction peut être activé, ou une ou la fonction peut être exécutée, ou une ou la valeur de fonction peut être appliquée.

11. Dispositif de commande multifonctionnel (12) selon l'une quelconque des revendications précédentes, **caractérisé en ce que** le dispositif de commande multifonctionnel (12) présente au moins un commutateur de sélection (20), par lequel au moins un dispositif de commande de fonction à utiliser ou un tel dispositif supplémentaire peut être sélectionné, le commutateur de sélection (20) étant réalisé en tant que commutateur rotatif, à pression ou à coulisse.

12. Dispositif de commande multifonctionnel (12) selon la revendication 11, **caractérisé en ce que**, après l'actionnement du commutateur de sélection (20), le dispositif de commande de fonction sélectionné peut être représenté en tant que symbole d'affichage à l'intérieur d'une zone d'affichage (44) prévue à cette fin sur l'unité de moniteur (38).

13. Dispositif de commande multifonctionnel (12) selon l'une quelconque des revendications 11 ou 12, **caractérisé en ce que**, après l'actionnement du commutateur de sélection (20), les éléments de commande de fonction et/ou fonctions et/ou valeurs de fonctions affectés au dispositif de commande de fonction sélectionné peuvent être représentés en tant que symboles d'affichage à l'intérieur des zones d'affichage (42) qui sont affectées aux commutateurs à pression (18).

14. Dispositif de commande multifonctionnel (12) selon l'une quelconque des revendications précédentes, **caractérisé en ce que** le commutateur rotatif (16) est également un commutateur à pression.

15. Dispositif de commande multifonctionnel (12) selon la revendication 14, **caractérisé en ce que** le commutateur rotatif (16) est un ou le commutateur de confirmation (16).

16. Dispositif de commande multifonctionnel (12) selon l'une quelconque des revendications précédentes, **caractérisé en ce que**, au moyen du dispositif de commande multifonctionnel, il est possible d'utiliser au moins un ou au moins le dispositif de commande de fonction qui est un autoradio et/ou un lecteur de cassettes et/ou un téléviseur et/ou un lecteur de disque compact et/ou un ordinateur de bord et/ou un téléphone et/ou une installation de protection contre le vol et/ou un dispositif de commande de climatisation et/ou un dispositif de synchronisation et d'affichage de l'heure et/ou un système de navigation et/ou un système d'information sur la circulation et/ou un système de courrier et/ou une installation de contrôle de la vitesse.
